(19) Europäisches Patentamt European Patent Office Office européen des brevets

(11) **EP 1 428 038 B1**

(12) **FASCICULE DE BREVET EUROPEEN**

(45) Date de publication et mention de la délivrance du brevet:
**20.06.2007 Bulletin 2007/25**

(51) Int Cl.:
*G01S 3/805* (2006.01)     *G01V 1/20* (2006.01)
*G01V 1/38* (2006.01)

(21) Numéro de dépôt: 02796299.2

(22) Date de dépôt: **20.08.2002**

(86) Numéro de dépôt international:
**PCT/FR2002/002909**

(87) Numéro de publication internationale:
**WO 2003/019224 (06.03.2003 Gazette 2003/10)**

(54) **PROCEDE DE TRAITEMENT DES SIGNAUX D'UNE ANTENNE LINEAIRE REMORQUEE**

VERFAHREN ZUM VERARBEITEN VON SIGNALEN AUS EINEM ABGESCHLEPPTEN LINEAREN ARRAY

METHOD OF PROCESSING SIGNALS FROM A TOWED LINEAR ARRAY

(84) Etats contractants désignés:
**AT BE BG CH CY CZ DE DK EE ES FI FR GB GR IE IT LI LU MC NL PT SE SK TR**

(30) Priorité: **24.08.2001 FR 0111106**

(43) Date de publication de la demande:
**16.06.2004 Bulletin 2004/25**

(73) Titulaire: **Thales**
**75008 Paris (FR)**

(72) Inventeurs:
• **DOISY, Yves,**
**Thales Intellectual Property**
**F-94117 Arcueil Cedex (FR)**

• **DERUAZ, Laurent,**
**Thales Intellectual Property**
**F-94117 Arcueil Cedex (FR)**
• **NOUTARY, Edmond,**
**Thales Intellectual Property**
**F-94117 Arcueil Cedex (FR)**

(74) Mandataire: **Lucas, Laurent Jacques et al**
**Marks & Clerk France**
**31-33 Avenue Aristide Briand**
**94117 Arcueil Cedex (FR)**

(56) Documents cités:
**FR-A- 2 651 950     FR-A- 2 685 848**
**FR-A- 2 727 765**

**Description**

La présente invention se rapporte aux procédés de traitement des signaux d'une antenne linéaire remorquée. Elle permet notamment de lever l'ambiguïté droite-gauche sur une telle antenne lorsqu'elle est activée, c'est-à-dire qu'elle fonctionne en réception des échos produits à partir des émissions d'un sonar actif.

Pour lever cette ambiguïté, on connaît, en particulier du brevet français n° 89 11 749 déposé par la société THOMSON-CSF le 8 septembre 1989, publié le 15 mars 1991 sous le n° 2 651 950 et délivré le 17 avril 1992, la technique consistant à remplacer chaque hydrophone omnidirectionnel par au moins 3 hydrophones situés dans un plan perpendiculaire à l'axe de l'antenne linéaire et répartis sur un cercle, intérieur à l'antenne et centré sur son axe. Ainsi, on constitue une antenne volumique permettant de construire des réponses d'antenne dotées de capacités de réjection droite-gauche. En particulier, le traitement des signaux permet de créer un "zéro" dans la direction ambiguë par rapport à la direction de consigne de la voie.

Pour obtenir un lever d'ambiguïté satisfaisant en utilisant cette technique, il est nécessaire que les "triplets" d'hydrophones, plus généralement les n-multiplets", soient alignés de façon à constituer un ensemble de 3 (n) sous-antennes linéaires. On est alors amené à assurer cette linéarité à l'aide de liaisons rigides entre les triplets, ce qui présente l'inconvénient de ne bien fonctionner que pour des antennes pas trop longues. Or on cherche de plus en plus à diminuer la fréquence de travail pour augmenter la portée. Une telle diminution conduit à augmenter la longueur des antennes dans des proportions telles que la linéarité des sous-antennes devient de plus en plus difficile à contrôler.

En outre, comme le diamètre de l'antenne est petit devant la longueur d'onde, la création d'un zéro conduit à des pertes de signal d'autant plus grandes que la fréquence est plus basse, en particulier lorsque le bruit dominant est décorrélé entre hydrophones d'un même triplet, ce qui représente un deuxième inconvénient très sérieux.

Le traitement selon l'invention permet de remédier à ces inconvénients notamment :

- en s'affranchissant des effets de rotation des triplets (n-multiplets) les uns par rapport aux autres,
- en assurant un gain entre la formation de voie d'une antenne et la formation de voie droite-gauche, quelles que soient les conditions de bruit dominant.

Pour cela, l'invention propose un procédé de traitement des signaux d'une antenne linéaire remorquée, notamment pour lever l'ambiguïté droite-gauche, cette antenne comprenant un ensemble de multiplets d'hydrophones comportant chacun $n \geq 3$ hydrophones répartis dans une section droite de l'axe longitudinal de l'antenne, principalement caractérisé en ce que l'on mesure l'angle de roulis de chaque multiplet par rapport à la verticale, que l'on synthétise à partir des signaux des hydrophones et de cet angle de roulis $p \geq 3$ sous-antennes linéaires, que l'on forme $M_v$ voies de gisement avec chaque sous-antenne et que l'on forme 2 voies droite-gauche adaptatives à partir des p sous-antennes pour chaque direction correspondant à chaque voie de gisement.

Selon une autre caractéristique, on utilise un traitement cohérent pour former les M voies de gisement.

Selon une autre caractéristique, pour former les voies droite-gauche on estime la matrice interspectrale inverse $\hat{\Gamma}^{-1}$ sur N+1 échantillons temporels et A+1 canaux doppler, puis on détermine deux vecteurs de déphasage $d_d$ et $d_g$ associés aux voies droite et gauche pour chaque voie de gisement et on détermine les voies $V_d$ et $V_g$ à partir de ces vecteurs et de cette matrice inverse.

Selon une autre caractéristique, on utilise des inclinomètres pour déterminer les angles de roulis.

Selon une autre caractérisitique, n= p = 3.

D'autres particularités et avantages de l'invention apparaîtront clairement dans la description suivante, faite à titre d'exemple non limitatif en regard des figures annexées qui représentent :

- la figure 1, un synoptique du procédé selon l'invention;
- la figure 2, un graphique de définition de l'angle de roulis utilisé dans les calculs;
- la figure 3, un synoptique développé des étapes 102 et 103 de la figure 1;
- la figure 4, un synoptique développé de l'étape 104 de la figure 1; et
- la figure 5, un graphique de définition des autres angles utilisés dans les calculs.

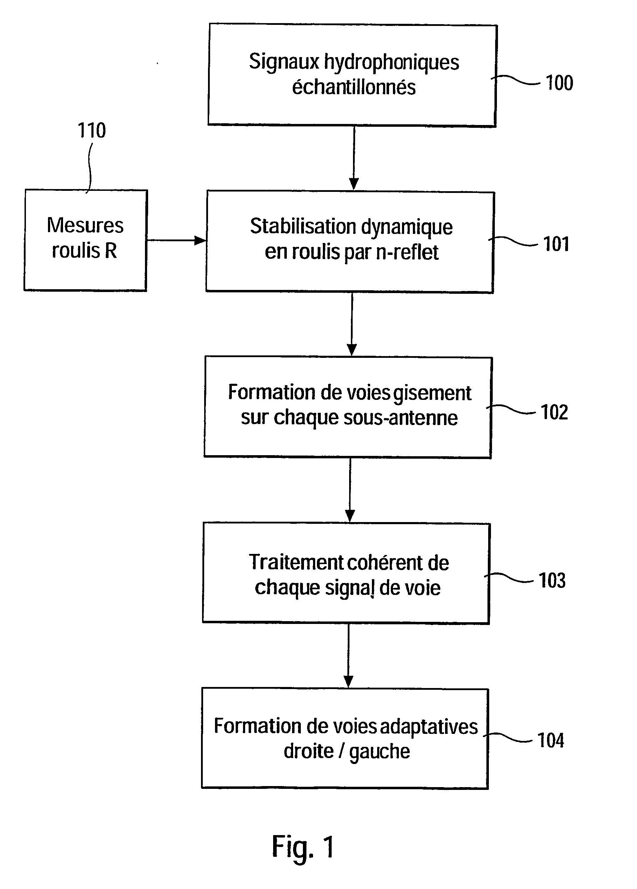

Le procédé de traitement selon l'invention comporte 4 modules d'étapes, comme représenté sur la figure 1.

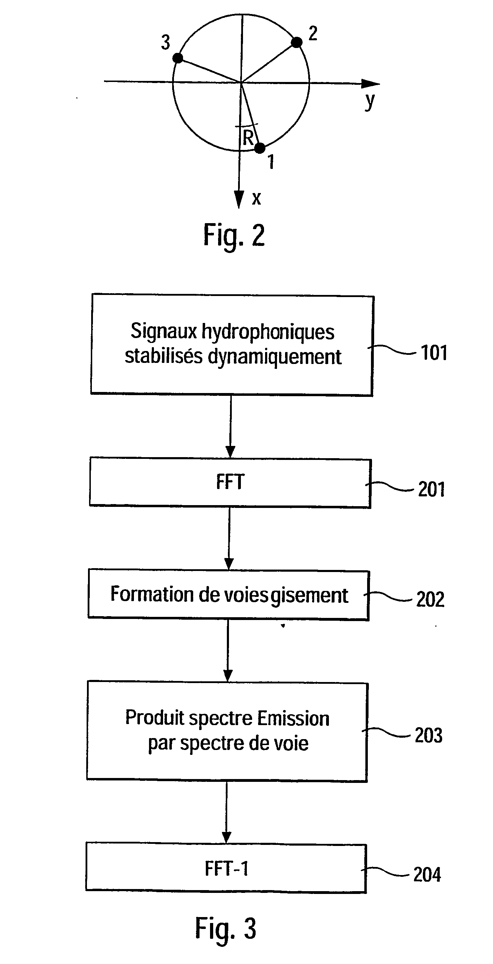

Les signaux hydrophoniques échantillonnés de l'ensemble des multiplets d'hydrophones de l'antenne dans un premier module préliminaire 100, ainsi que les angles de roulis R mesurés dans un deuxième module préliminaire 110 au niveau de chaque multiplet (ou de quelques uns seulement) au moyen d'un capteur de servitude, par exemple un inclinomètre, par rapport à la verticale, tels que définis sur la figure 2, sont appliqués à un premier module 101.

Le traitement effectué dans ce module 101 consiste à former à partir des n hydrophones de chaque multiplet et de l'indication de leur angle de roulis R, p hydrophones fictifs ayant une position angulaire fixe indépendante du multiplet considéré, de façon à reconstituer p antennes linéaires pour obtenir une stabilisation dynamique en roulis de l'ensemble de l'antenne.

Pour cela, les signaux des hydrophones sont interpolés spatialement selon une technique connue. Suivant une réalisation préférée, n=3 et p = 3, ce qui correspond au cas de l'antenne triple bien connue en elle-même. Les étapes 102 et 103 de formation de voies gisement sur chaque sous-antenne et de traitement cohérent de chaque signal de voie sont mises en ceuvre dans le domaine fréquentiel en 4 modules d' étapes, comme représenté sur la figure 3. Ces étapes de calcul sont connues de l'art antérieur.

Dans le cas où le code émis est sensible au doppler, le traitement cohérent est un traitement multicopies connu de l'art antérieur par exemple dans le brevet francais publié sous le n° 2 687 226.

De manière résumée, les signaux hydrophoniques stabilisés dynamiquement dans le module 101 sont convertis de l'espace temps dans l'espace fréquence par un module de transformation de Fourrier rapide (FFT) 201. On effectue ensuite de manière connue une formation de voies en gisement dans un module 202, puis le produit des spectres conjugués du signal d'émission dopplérisé par le spectre de chaque voie dans un module 203. Un module 204 de FFT inverse permet enfin d'obtenir les signaux de voies traités de manière cohérente, correspondant à ceux délivrés par le module 103.

Dans un module 104, on effectue une formation de voie adaptative sur chaque voie gisement obtenue en sortie de l'étape 103.

Les voies gisement sont alors réparties en fonctions du cosinus du gisement variant de -1 à +1 : si u désigne le cosinus du gisement, les directions de pointage vérifient la relation

$$u_m = (2m+1)/M_v \text{ avec } -\frac{M_v}{2} \le m \le \frac{M_v}{2} - 1, \; M_v$$

étant le nombre de voies gisement.

Le signal de sortie de la voie m de l'antenne linéaire I ($1 \le I \le 3$) à l'instant t sera noté $V_I(m,t,\alpha)$, et $\overline{V}(m,t,\alpha)$ désignera le vecteur colonne constitué des 3 composantes $V_1$, $V_2$, $V_3$ pour le gisement m à l'instant t, avec un "doppler " $\alpha$.

Le "doppler" $\alpha$ est défini comme étant le décalage doppler $\dfrac{2\overline{V}}{C}$ où $\overline{V}$ représente le vecteur résultant des vitesses radiales de l'émetteur et du récepteur, C étant la célérité du son dans l'eau. Sa plage de variation est comprise entre 2 valeurs de $\alpha$ correspondant à des vitesses extrêmes. De manière connue, un canal doppler a une largeur

$$\Delta\alpha = \frac{1}{f_0 T}$$

$f_0$ et T étant respectivement la fréquence centrale et la durée du code d'émission. Entre les 2 valeurs extrêmes de $\alpha$, on définit ainsi A+1 canaux doppler adjacents.

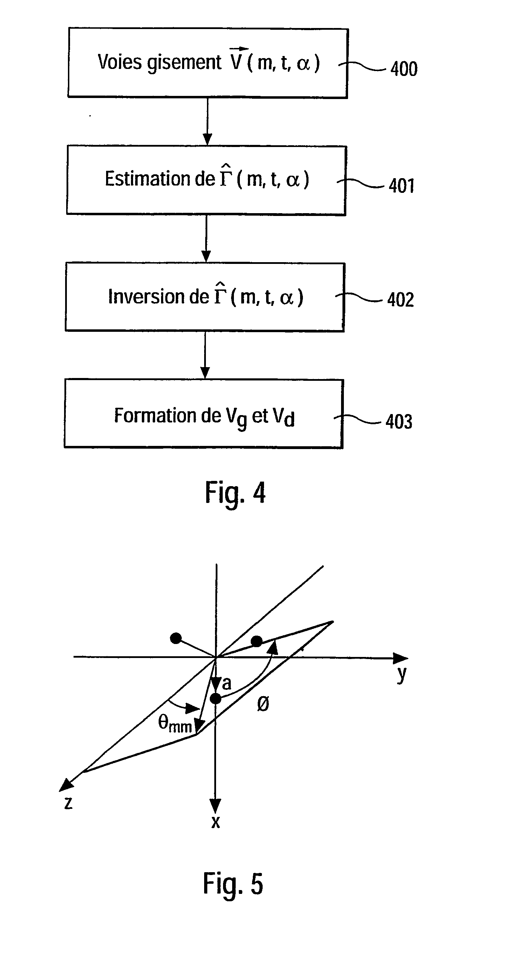

Le module 104 se compose de 3 modules de sous-étape qui sont représentés sur la figure 4 :

- une estimation 401 de la matrice interspectrale ;
- une inversion 402 de la matrice interspectrale ;
- une formation 403 des 2 voies droite-gauche.

Dans le module 401, on estime la matrice interspectrale $\hat{\Gamma}(m,t,\alpha)$ par moyennage sur N+1 échantillons temporels, et sur A + 1 canaux doppler en appliquant la formule :

$$\hat{\Gamma}(m,t,\alpha) = \sum_{\alpha'=-\frac{A}{2}}^{\frac{A}{2}} \sum_{t'=\frac{N}{2}}^{\frac{N}{2}} \vec{V}(m,t+t',\alpha+\alpha') . [\vec{V}(m,t+t'\alpha+\alpha')]^+$$

la notation + désignent la matrice transposée conjuguée. Avantageusement, on effectue un recouvrement en temps de 50 %.

La matrice $\hat{V}(m,t,\alpha)$ ayant une dimension faible (p), l'estimation requiert de l'ordre de 1,5 p à 2p observations indépendantes et donc s'effectue sur un temps très court permettant au traitement de s'adapter aux variations de l'environnement (bruit ou réverbération) et aussi de prendre en compte l'écho pour le rejeter dans les voies de direction opposées à sa direction d'arrivée.

Dans le module 402, on calcule la matrice inverse $\hat{\Gamma}^{-1}(m,t,\alpha)$ par une méthode directe connue.

Enfin, dans le module 403, on forme les voies gauche et droite $V_g$ et $V_d$ , de la manière explicitée ci-dessous dans le cas d'un triplet.

La figure 5 représente, dans ce cas du triplet, les notations utilisées : a est le rayon du triplet; $\theta$ et $\phi$ sont les angles qui correspondent à la direction de pointage d'une voie lorsqu'elle est formée.

Pour cela, dans le module 403, on forme les 2 voies $V_g$ et $V_d$ en calculant d'abord les 2 vecteurs de déphasages $d_d$ et $d_g$ associés aux voies droite et gauche pour chaque voie en gisement.

Pour un pointage dans le plan horizontal, soit $\phi = 0$, ces 2 vecteurs sont donnés par les équations ci-dessous :

$$\underline{d}_g(m) = \begin{bmatrix} \exp[i2\pi a \dfrac{f_0}{c}\sin\theta_m \cos(R - \dfrac{\pi}{2})] \\ \exp[i2\pi a \dfrac{f_o}{c}\sin\theta_m \cos(\dfrac{2\pi}{3} + R - \dfrac{\pi}{2})] \\ \exp[i2\pi a \dfrac{f_o}{c}\sin\theta_m \cos(\dfrac{4\pi}{3} + R - \dfrac{\pi}{2})] \end{bmatrix}$$

$$\underline{d}_d(m) = \begin{bmatrix} \exp[i2\pi a \dfrac{f_0}{c}\sin\theta_m \cos(R + \dfrac{\pi}{2})] \\ \exp[i2\pi a \dfrac{f_o}{c}\sin\theta_m \cos(\dfrac{2\pi}{3} + R + \dfrac{\pi}{2})] \\ \exp[i2\pi a \dfrac{f_o}{c}\sin\theta_m \cos(\dfrac{4\pi}{3} + R + \dfrac{\pi}{2})] \end{bmatrix}$$

où $f_o$ est la fréquence d'émission.

On forme ensuite les voies $V_g$ et $V_d$ en appliquant les équations suivantes :

Pour la voie gauche :

$$V_g(m,t,\alpha) = \frac{\underline{d}_g^{+}(m)\hat{\Gamma}^{-1}(m,t,\alpha)}{\underline{d}_g^{+}(m)\hat{\Gamma}^{-1}(m,t,\alpha)\underline{d}_g(m)} \cdot \bar{V}(m,t,\alpha)$$

Pour la voie droite :

$$V_d(m,t,\alpha) = \frac{\underline{d}_d^{+}(m)\hat{\Gamma}^{-1}(m,t,\alpha)}{\underline{d}_d^{+}(m)\hat{\Gamma}^{-1}(m,t,\alpha)\underline{d}_d(m)} \cdot \bar{V}(m,t,\alpha)$$

Pour une direction de consigne donnée, le traitement construit une voie conventionnelle et une référence de bruit ayant un zéro dans la direction de consigne, puis il vient soustraire de manière cohérente le signal de référence du signal de la voie conventionnelle.

Il en résulte que :

- dans la direction de la cible : celle-ci est exclue de la référence de bruit, et le traitement produit un meilleur gain par rapport au bruit ambiant

- dans la direction ambiguë, la cible est prise en compte dans la référence de bruit, et est soustraite comme un brouilleur, procurant ainsi une réjection droite/gauche. Ceci est possible parce que l'écho provenant de la cible a un niveau suffisant grâce au traitement cohérent effectué avant la formation des voies $V_g$, $V_d$, et aussi parce que la durée d'estimation de la matrice est plus courte que la durée de l'écho.

## Revendications

1. Procédé de traitement des signaux d'une antenne linéaire remorquée, notamment pour lever l'ambiguïté droite-gauche, cette antenne comprenant un ensemble de multiplets d'hydrophones comportant chacun $n \geq 3$ hydrophones répartis dans une section droite de l'axe longitudinal de l'antenne, l'angle de roulis de chaque multiplet étant mesuré (110) par rapport à la verticale, **caractérisé en ce que** l'on synthétise (101) à partir des signaux (100) des hydrophones et de cet angle de roulis p $\geq 3$ sous-antennes linéaires, que l'on forme (102) M voies de gisement avec chaque sous-antenne et que l'on forme 2 voies droite-gauche adaptatives à partir des p sous-antennes pour chaque direction correspondant à chaque voie de gisement.

2. Procédé selon la revendication 1, **caractérisé en ce qu'**on utilise un traitement cohérent (103) pour former les M voies de gisement.

3. Procédé selon l'une quelconque des revendications 1 ou 2, **caractérisé en ce que** pour former les voies droite-gauche on estime la matrice interspectrale inverse $\hat{\Gamma}^{-1}$ sur N+1 échantillons temporels et A+1 anaux doppler (401,402), puis on détermine (403) deux vecteurs de déphasage $d_d$ et $d_g$ associés aux voies droite et gauche pour chaque voie de gisement et on détermine les voies $V_d$ et $V_g$ à partir de ces vecteurs et de cette matrice inverse.

4. Procédé selon l'une quelconque des revendications 1 à 3, **caractérisé en ce que** l'on utilise des inclinomètres pour déterminer les angles de roulis.

5. Procédé selon l'une quelconque des revendications 1 à 4, **caractérisé en ce que** n= p = 3.

## Claims

1. Signal processing method for a towed linear antenna, notably to resolve right-left ambiguity, this antenna comprising a set of hydrophone multiplets each comprising $n \geq 3$ hydrophones spread over a straight section of the longitudinal axis of the antenna, the roll angle of each multiplet being measured (110) relative to the vertical, **characterized in that** the signals (100) of the hydrophones and this roll angle are used to synthesize (101) $p \geq 3$ linear sub-antennas, then M azimuth channels are formed (102) with each subantenna and 2 adaptive right-left channels are formed from the p sub-antennas for each direction corresponding to each bearing channel.

2. Process according to Claim 1, **characterized in that** a coherent treatment (103) is used to form the M bearing channels.

3. Process according to any of the Claims 1 or 2, **characterized in that** to form the right-left channels the inverse interspectral matrix $\hat{\Gamma}^{-1}$ is estimated (401, 402) with N+1 time samples and A+1 Doppler channels, then two dephasing vectors $d_r$ and $d_1$ associated with the right and left channels are determined (403) for each azimuth channel and the channels $V_r$ and $V_1$ are determined from these vectors and this inverse matrix.

4. Process according to any of the Claims 1 to 3, **characterized in that** inclinometers are used to determine the rolling angles.

5. Process according to any of the Claims 1 to 4, **characterized in that** n = p = 3.

**EP 1 428 038 B1**

**Patentansprüche**

1. Verfahren zum Verarbeiten der Signale einer geschleppten linearen Antenne, insbesondere zum Eliminieren von Rechts-Links-Zweideutigkeit, wobei diese Antenne eine Einheit von Hydrophon-Multipletts aufweist, die jeweils n $\geq$ 3 Hydrophone aufweisen, die in einem geraden Abschnitt der Längsachse der Antenne verteilt sind, wobei der Rollwinkel jedes Multipletts in Bezug auf die Senkrechte gemessen wird (110), **dadurch gekennzeichnet, dass** man ausgehend von den Signalen (100) der Hydrophone und diesem Rollwinkel p $\geq$ 3 lineare Unterantennen synthetisiert (101), dass man M Peilungskanäle mit jeder Unterantenne bildet (102), und dass man 2 adaptive Rechts-Links-Kanäle ausgehend von den p Unterantennen für jede Richtung, die jedem Peilungskanal entspricht, bildet.

2. Verfahren nach Anspruch 1, **dadurch gekennzeichnet, dass** man eine kohärente Verarbeitung (103) verwendet, um die M Peilungskanäle zu bilden.

3. Verfahren nach einem der Ansprüche 1 oder 2, **dadurch gekennzeichnet, dass** man zum Bilden der Rechts-Links-Kanäle die umgekehrte interspektrale Matrix $\hat{\Gamma}^{-1}$ über N+1 zeitliche Abtastungen und A + 1 Dopplerkanäle (401, 402) schätzt und dann für jeden Peilungskanal zwei Phasenverschiebungsvektoren $d_d$ und $d_g$ bestimmt (403), die zu dem rechten und linken Kanal gehören und die Kanäle $V_d$ und $V_g$ ausgehend von diesen Vektoren und dieser umgekehrten Matrix bestimmt.

4. Verfahren nach einem der Ansprüche 1 bis 3, **dadurch gekennzeichnet, dass** man Querneigungsanzeiger verwendet, um die Rollwinkel zu bestimmen.

5. Verfahren nach einem der Ansprüche 1 bis 4, **dadurch gekennzeichnet, dass** n = p = 3 ist.

```
                          ┌─────────────────────────────┐
                          │   Signaux hydrophoniques     │──── 100
                          │      échantillonnés          │
                          └─────────────────────────────┘
                                        │
          110                           ▼
           │                ┌─────────────────────────────┐
  ┌──────────────┐          │   Stabilisation dynamique    │──── 101
  │   Mesures    │─────────▶│   en roulis par n-reflet     │
  │   roulis R   │          └─────────────────────────────┘
  └──────────────┘                      │
                                        ▼
                          ┌─────────────────────────────┐
                          │  Formation de voies gisement │──── 102
                          │   sur chaque sous-antenne     │
                          └─────────────────────────────┘
                                        │
                                        ▼
                          ┌─────────────────────────────┐
                          │   Traitement cohérent de      │──── 103
                          │    chaque signal de voie      │
                          └─────────────────────────────┘
                                        │
                                        ▼
                          ┌─────────────────────────────┐
                          │  Formation de voies adaptatives │── 104
                          │       droite / gauche         │
                          └─────────────────────────────┘
```

## Fig. 1

Fig. 2

Signaux hydrophoniques stabilisés dynamiquement — 101

FFT — 201

Formation de voies gisement — 202

Produit spectre Emission par spectre de voie — 203

FFT-1 — 204

Fig. 3

Voies gisement $\vec{V}$ ( m, t, $\alpha$ ) —— 400

Estimation de $\hat{\Gamma}$ ( m, t, $\alpha$ ) —— 401

Inversion de $\hat{\Gamma}$ ( m, t, $\alpha$ ) —— 402

Formation de $V_g$ et $V_d$ —— 403

## Fig. 4

## Fig. 5

**RÉFÉRENCES CITÉES DANS LA DESCRIPTION**

**Documents brevets cités dans la description**

- FR 8911749

- FR 2651950